Europäisches Patentamt

European Patent Office

Office européen des brevets

(19)

(11) Veröffentlichungsnummer : **0 024 563**
**B1**

(12) # EUROPÄISCHE PATENTSCHRIFT

(45) Veröffentlichungstag der Patentschrift :
**15.12.82**

(51) Int. Cl.³ : **G 11 B 5/58, G 11 B 21/16**

(21) Anmeldenummer : **80104484.3**

(22) Anmeldetag : **29.07.80**

(54) **Kopfträgeranordnung für ein Diskettenlaufwerk.**

(30) Priorität : 06.08.79 US 64064

(43) Veröffentlichungstag der Anmeldung :
**11.03.81 (Patentblatt 81/10)**

(45) Bekanntmachung des Hinweises auf die Patenterteilung : **15.12.82 Patentblatt 82/50**

(84) Benannte Vertragsstaaten :
**DE GB NL**

(56) Entgegenhaltungen :
DE A 2 730 719
DE B 2 003 935
GB A 1 467 218
US A 3 914 792
US A 4 034 412
US A 4 151 573
US A 4 167 766

(73) Patentinhaber : **SIEMENS AKTIENGESELLSCHAFT**
**Berlin und München**
**Postfach 22 02 61**
**D-8000 München 22 (DE)**

(72) Erfinder : **Keller, Jacob P.**
**6502 San Gabriel Cir.**
**Buena Park California 90620 (US)**
Erfinder : **Fay, Lawrence W.**
**22595 Killy Street**
**El Toro California 92630 (US)**

EP 0 024 563 B1

## Kopfträgeranordnung für ein Diskettenlaufwerk

Die Erfindung bezieht sich auf eine Kopfträgeranordnung für ein Diskettenlaufwerk, die eine in radialer Richtung bezüglich einer als Aufzeichnungsmedium dienenden Diskette bewegbare Grundplatte aufweist und die einen wenigstens einen Magnetkopf tragenden Kopftragarm aufweist, der an der Grundplatte drehbar gelagert ist und der senkrecht zur Ebene der Diskette schwenkbar ist.

Bekannte magnetische Speichereinrichtungen für Datenverarbeitungsanlagen verwendeten Aufzeichnungsverfahren, bei denen ein Magnetkopf ein Aufzeichnungsmedium berührt. Dieses Aufzeichnungsverfahren wurde bis zu einem gewissen Umfang nach der Entwicklung eines Magnetkopfs kleiner Masse, insbesondere für Massenspeicheranordnungen, wie Magnetplattenspeicher, überholt. Bei dieser verbesserten Magnetkopfanordnung weist der Magnetkopf auch während der Aufzeichnungsvorgänge einen Abstand zur magnetischen Oberfläche auf, d.h. dem Magnetkopf wird ein « Fliegen » auf einer dünnen Luftschicht über dem Aufzeichnungsmedium ermöglicht, um eine enge Wechselwirkung zwischen dem magnetischen Wandler und der magnetischen Oberfläche zu ermöglichen. Andererseits wird eine berührende Aufzeichnung weiterhin, insbesondere bei mehrkanaligen Speicheranordnungen, wie Magnetbandspeichern benutzt.

Bei Speichereinrichtungen mit einem rotierenden magnetischen Speichermedium änderte sich die Kopfladetechnik wiederum, als die sogenannten Diskettenspeicher entwickelt wurden, die auch als « Floppy-Disk »-Speicher bezeichnet werden. In diesen Speichersystemen wird eine dünne biegsame Magnetplatte als Speichermedium in Verbindung mit kostengünstigen Zugriffs-, übertragungs- und Steuereinheiten benutzt. Die geringen Kosten derartiger Speichersysteme haben eine weitverbreitete Verwendung für Programmspeicherungen, Eingabe- und Steueranwendungen zur Folge.

In den ursprünglichen Diskettenspeichern enthält der magnetische Wandler üblicherweise einen einkanaligen Magnetkopf, der mit einer Kontaktoberfläche das Aufzeichnungsmedium berührt. Diese Kontaktoberfläche ist als Teil eines kugelförmigen Körpers ausgebildet oder hat wenigstens eine gekrümmte Oberfläche. Der Wandler ist an einem bewegbaren Kopfwagen angeordnet, der auf verschiedene konzentrische Spuren auf der Diskette positionierbar ist. Auf der gegenüberliegenden Seite der Diskette, ebenfalls in Berührung mit der Diskette, ist ein Andruckfilz vorgesehen. Dieser Andruckfilz ist am Ende eines federnd gelagerten Tragarms befestigt, der mit Hilfe eines Elektromagneten steuerbar ist und der im unerregten Zustand des Elektromagneten eine Druckkraft ausübt, wenn Aufzeichnungs- oder Wiedergabevorgänge durchgeführt werden.

In letzter Zeit wurden jedoch Diskettenlaufwerke entwickelt, bei denen beide Seiten der Diskette für Aufzeichnungsvorgänge benutzt werden. Der Grund hierfür ist in erster Linie in einer Erhöhung der Speicherkapazität zu sehen. Daher wird weiterhin nur ein einziger langsamer Zugriffsmechanismus verwendet. Die Magnetköpfe sind auf gegenüberliegenden Seiten der Diskette im wesentlichen einander gegenüberliegend angeordnet, jedoch mit einem kleinen Versatz bezüglich der Luftspalte der Magnetköpfe, um eine gegenseitige Beeinflussung durch den Magnetfluß zu vermeiden.

Wie oben bereits erwähnt, sind Diskettenlaufwerke wegen ihrer geringen Kosten für eine weit verbreitete Verwendung in einer Vielzahl von Anwendungsfällen vorgesehen. Deshalb war es die Aufgabe bei Diskettenspeichern, mehr als bei anderen Speichern, einen einfachen Aufbau der Kopfträgeranordnungen zu erreichen, der sich durch hohe Zuverlässigkeit, genügend kleine Zugriffszeit und hohe Speicherkapazität auszeichnet.

Bekannte Hersteller von Diskettenlaufwerken beschreiten drei Wege für eine beidseitige Aufzeichnung unter Berührung des Aufzeichnungsträgers. Einer dieser Wege ist aus der US-PS 4 089 029 bekannt. Bei dieser bekannten magnetischen Aufzeichnungsanordnung, bei der ein Paar von Wandlern gegenüberliegende Seiten des Aufzeichnungsmediums berührt, ist jeder der Wandler an einer verhältnismäßig schwachen Tragfeder befestigt. Verhältnismäßig starre Tragarme weisen Vertiefungen an den Mittelpunkten der Wandler auf, um eine nach allen Richtungen gelenkige Verbindung mit dem Übertrager herzustellen. Die Tragarme sind an einem verhältnismäßig starren Teil einer Tragfeder befestigt, um eine vorgegebene Kraft auf die Wandler auszuüben. Dieser bekannte Aufbau mit der Tragfeder und der allseits gelenkigen Verbindung ermöglicht es den Wandlern, sich einer Flatterbewegung des Aufzeichnungsmediums anzupassen. Dies ist eine wirksame Lösung in bezug auf Zugriffszeiten und Speicherkapazität. Jedoch sie ist verhältnismäßig teuer und empfindlich hinsichtlich Einjustierungen.

Eine weitere magnetische Aufzeichnungsvorrichtung für beidseitig beschriebene Aufzeichnungsmedien ist in der US-PS 4 151 573 beschrieben. Diese Anordnung verwendet einen festen Magnetkopf auf der einen Seite des Aufzeichnungsmediums und einen bewegbaren Magnetkopf auf der gegenüberliegenden Seite. Der bewegbare Magnetkopf ist an einem mittels einer Feder drehbar gelagerten Kopftragarm mit geringer Masse und hoher Steifigkeit befestigt, um das Aufzeichnungsmedium mit einer geringen Kraft gegen den festen Magnetkopf zu drücken. Die Kraft ist ausreichend, um zusammen mit einem leichten Eindringen des festen Magnetkopfs in die Ebene des Aufzeichnungsmediums Abweichungen des Aufzeichnungsmediums in einer Richtung senkrecht zur Ebene des Aufzeichnungsmediums zu korrigieren. Es ist anzunehmen, daß die Magnetköpfe in ihrer Arbeitsstellung gehalten werden, um einen größtmöglichen Magnetfluß zu erreichen, ohne daß eine übermäßige Abnutzung auftritt oder daß lange Kopfaufsetzeiten erforderlich sind. Diese bekannte Anordnung hat einen einfacheren Aufbau als die oben erwähnte Anordnung, jedoch sind bei beiden Anordnungen die Magnetköpfe selbst dann in einer Ladestellung, wenn sie nicht in Betrieb sind, d.h. wenn sie nicht in einem aufzeichnenden oder wiedergebenden Zustand sind.

Ein weiteres Aufzeichnungssystem, das eine Magnetplatte verwendet, ist in der US-PS 3 814 441 beschrieben. Bei diesem System wird eine Anordnung zum Schwenken eines Aufzeichnungsarms mit einem Magnetkopf auf die Mitte einer vorgegebenen Spur und ein Schrittmotor verwendet, der den Magnetkopf von Spur zu Spur positioniert. Das System enthält eine Sicherheitsanhebevorrichtung, die vorgesehen ist, um übermäßige Abnutzung einer der Spuren zu verhindern. Die Anhebeanordnung wird durch einen Elektromagneten gesteuert, der seinerseits durch ein Zeitglied erregt wird. Dieses Zeitglied wird gesetzt, wenn eine von mehreren Steueroperationen ausgelöst wird und nach einer vorgegebenen Zeit zurückgesetzt. Durch das Zurücksetzen des Zeitgebers wird die Erregung des Elektromagneten beendet und der Aufzeichnungsarm wird selbsttätig abgehoben. Dies wird durch eine Federanordnung erreicht, die gegen den Elektromagneten arbeitet, so daß immer eine Anhebebewegung des Aufzeichnungsarms erfolgt und auf diese Weise ein fehlersicherer Betrieb erreicht wird. Durch diese fehlersichere Arbeitsweise wird eine übermäßige Abnutzung vollständig vermieden, jedoch erfordert das System andererseits lange Aufsetzeiten für den Magnetkopf.

Der Erfindung liegt daher die Aufgabe zugrunde, eine Kopfträgeranordnung anzugeben, die eine geringe Masse und einen sehr einfachen Aufbau aufweist und die sowohl für eine einseitige als auch eine zweiseitige Aufzeichnung unter Berührung des Aufzeichnungsmediums geeignet ist.

Erfindungsgemäß wird die Aufgabe bei der Kopfträgeranordnung der eingangs genannten Art gelöst durch einen bezüglich der Grundplatte drehbar gelagerten Zusatzarm, der senkrecht zur Ebene der Diskette gegen den Kopftragarm und von diesem weg zwischen einer ersten Ladestellung, in der der Magnetkopf bezüglich der Diskette eine Arbeitsstellung einnimmt und eine zweite Ladestellung schwenkbar ist, in der der Magnetkopf, während er mit der Diskette noch in Berührung ist, bezüglich dieser eine Bereitschaftsstellung einnimmt und an dem eine Steueranordnung angreift, die den Zusatzarm von der ersten Ladestellung in die zweite Stellung anhebt, durch eine erste Federanordnung, die den Zusatzarm gegen den Kopftragarm in die erste Ladestellung drückt, um den an Kopftragarm angeordneten Magnetkopf mit der Diskette in Wechselwirkung zu bringen und durch eine zweite Federanordnung, die zwischen dem Kopftragarm und dem Zusatzarm angeordnet ist und die in der zweiten Ladestellung des Zusatzarms wirksam ist, um auf den Kopftragarm eine Druckkraft auszuüben, die kleiner ist als die vom Zusatzarm in der ersten Ladestellung ausgeübte Druckkraft, wobei der Magnetkopf sowohl in der Arbeitsstellung als auch in der Bereitschaftsstellung mit der Diskette in Berührung bleibt.

Die Kopfträgeranordnung gemäß der Erfindung hat den Vorteil, daß sie eine übermäßige Abnutzung der Spuren der Diskette vermeidet, die sich aus einer lang andauernden, wiederholten Berührung des Magnetkopfs mit einer Spur während einer Bereitschaftsstellung ergeben könnte.

Bei der vorliegenden Erfindung wird durch die Verwendung des Zusatzarms zusätzlich zum Kopftragarm der Magnetkopf in einer Bereitschaftsstellung gehalten, ohne daß eine übermäßigen Abnutzung verursacht wird oder daß lange Aufsetzeiten für den Magnetkopf erforderlich sind. Beide Arme sind bezüglich der Grundplatte des Kopfwagens drehbar gelagert. Der Zusatzarm ist in einer Richtung senkrecht zur Ebene der Diskette zwischen den beiden Ladestellungen bewegbar. In der ersten Ladestellung drückt eine Torsionsfeder den Zusatzarm gegen den Kopftragarm, um den dort befestigten Magnetkopf mit dem Aufzeichnungsmedium in Wechselwirkung zu bringen. In der zweiten Ladestellung wird der Zusatzarm durch die Steueranordnung, beispielsweise durch einen nicht erregten Elektromagneten angehoben. In dieser Stellung ist die oben genannte Feder nicht wirksam. Dennoch werden der Kopftragarm und der daran befestigte Magnetkopf weiterhin gegen das Aufzeichnungsmedium gedrückt. Dies wird durch eine Blattfeder erreicht, die in der zweiten Ladestellung noch wirksam ist. Dies hat eine Kraft auf den Kopftragarm zur Folge, die kleiner ist als die vom Zusatzarm in seiner ersten Ladestellung ausgeübte Kraft. Auf diese Weise bleibt der Kopftragarm fast unverändert in beiden Ladestellungen, wird aber in beiden Stellungen mit unterschiedlichen Kräften gegen die Oberfläche des Aufzeichnungsmediums gedrückt. Die Blattfeder wirkt mit einer so kleinen Kraft gegen den Kopftragarm, daß sie entgegengerichtete Kräfte überwindet, die durch die Befestigung des Kopftragarms auf der Grundplatte des Kopfwagens und das Kopfanschlußkabel hervorgerufen werden.

Vorteilhafte Weiterbildungen der Kopfträgeranordnung sind in den Unteransprüchen angegeben.

Im folgenden wird ein Ausführungsbeispiel der Kopfträgeranordnung gemäß der Erfindung anhand von Zeichnungen beschrieben.

Es zeigen:

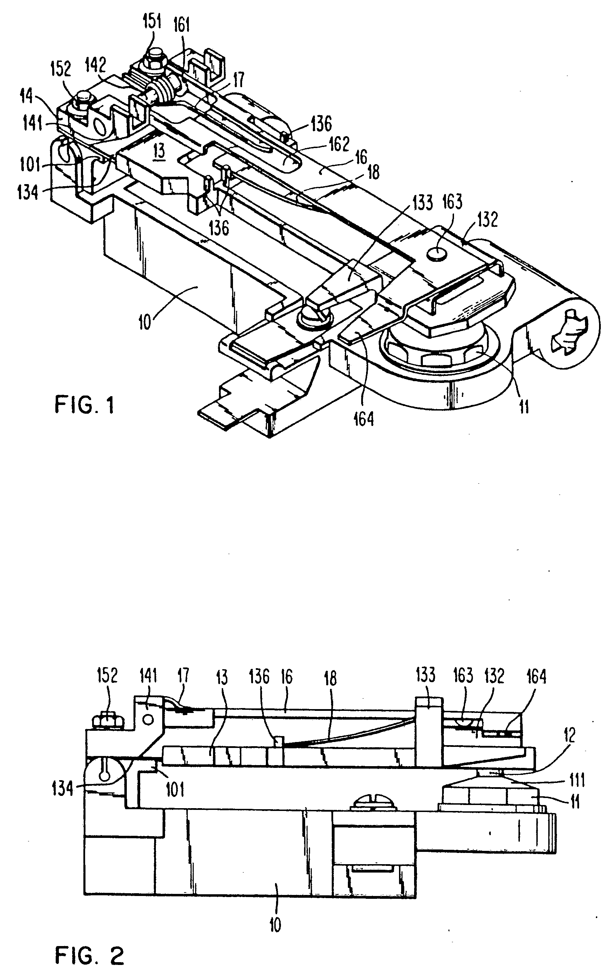

Figur 1 eine perspektivische Ansicht einer Kopfträgeranordnung für ein Diskettensystem einschließlich einer Grundplatte für einen Kopfwagen, einen an der Grundplatte befestigten unteren Magnetkopf, einen Haupttragarm für einen oberen Magnetkopf und einen an der Grundplatte drehbar angeordneten Zusatzarm.

Figur 2 eine Seitenansicht der in Fig. 1 dargestellten Kopfträgeranordnung,

Figur 3 eine weitere perspektivische Ansicht der Kopfträgeranordnung nach Fig. 1, bei der mehrere den Zusatzarm betreffende Teile zur besseren Darstellung entfernt sind.

Da Diskettenspeicher weit verbreitet sind, sind aus Gründen der Kürze und der Einfachheit nur diejenigen Teile gezeigt, die sich direkt auf die Kopfträgeranordnung beziehen. Es wird Bezug genommen auf die eingangs erwähnten US-Patentschriften, insbesondere auf die US-PS 4 151 573 und auf andere Patentschriften für Einzelheiten solcher Anordnungen, wie den Zugriffsmechanismus und Hilfsmittel für das Einführen bzw. das Auswerfen des biegsamen, rotierenden magnetischen Aufzeichnungsmediums : einer Diskette, die auch als « Floppy-Disk » bezeichnet wird und ebenfalls nicht dargestellt ist.

Am freien Ende der Grundplatte 10 ist ein fester Magnetkopf 11 angeordnet, der beispielsweise als « Knopfkopf » bekannt ist. Andere Arten von Wandlern können verwendet werden, da eine große Anzahl von Arten im Zusammenhang mit Diskettenspeichern verwendet wird. Sie haben typischerweise eine konvexe Oberfläche, die zu dem Aufzeichnungsmedium hinweist. « Knopfkopf »-Wandler enthalten im allgemeinen einen Lese/Schreibkopf für eine einzige Spur und daneben liegende Randlöschköpfe, die allgemein bekannt sind und in den Einzelheiten nicht beschrieben werden müssen.

Der feste Magnetkopf 11 ist derart angeordnet, daß er in die Ebene des Aufzeichnungsmediums leicht eindringt oder diese schneidet. Wie dargestellt, hat ein typischer Magnetkopf dieser Art für die Berührung mit dem Aufzeichnungsmedium eine runde Oberseite, die ein flaches Spitzenteil 111 bildet. Vorzugsweise wird die Kopfoberfläche zuerst flach gestaltet und ein konvexer kugelförmiger Rand wird anschließend erzeugt, um die Kante zwischen den flachen und gekrümmten Oberflächen zu runden oder ineinander übergehen zu lassen, um einen möglichst geringen Verschleiß des Aufzeichnungsmediums zu erreichen.

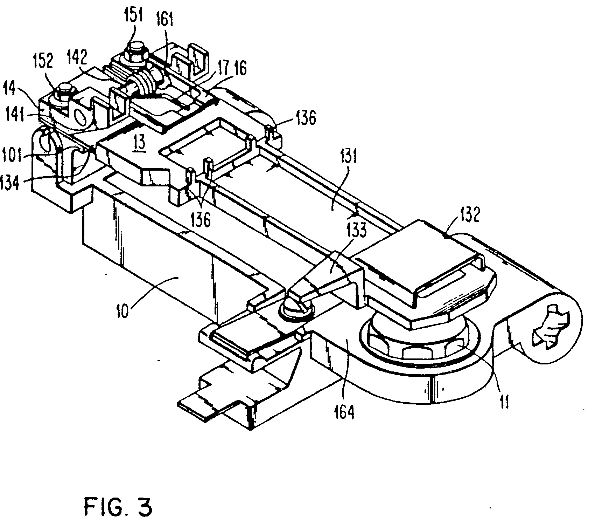

An dem Ende der Grundplatte 10, das dem festen Magnetkopf 11 gegenüberliegt, ist ein verhältnismäßig steifer Kopftragarm 13, der eine geringe Masse aufweist, drehbar gelagert. Dies ist am besten in Fig. 3 zu erkennen. Der Kopftragarm 13 hat in Längsrichtung einen dünn ausgearbeiteten Bereich 131, um das Gewicht ohne Verminderung der Steifigkeit zu vermindern. Am freien Ende des Kopftragarms 13 ist ein Gehäuse vorgesehen, das eine Kopfabdeckung 132 für einen oberen Magnetkopf 12 bildet. Innerhalb des oberen Magnetkopfes 12 ist eine nicht dargestellte, kleine Öffnung vorgesehen, die dem festen unteren Magnetkopf 11 gegenüberliegt und in der der obere Magnetkopf 12 mit seinen zugehörigen Spulen versetzt angeordnet sind. Am freien Ende des Kopftragarms 13 ist ein Ansatz 133 vorgesehen, mit dem das Aufsetzen gesteuert wird und der an einer Seite des Kopftragarms angeordnet ist. Dieser Ansatz 133 steht im Eingriff mit einem durch einen Elektromagneten betätigten, nicht dargestellten Steuerelement, um ein selbsttätiges Schwenken des Kopftragarms 13 weg vom festen unteren Magnetkopf 11 in eine Entladestellung zu ermöglichen oder um den Arm 13 freizugeben, um ein « Landen » des Magnetkopfes 12 auf dem Aufzeichnungsmedium zu ermöglichen. Diese Ladestellung des Kopftragarms 13 ist in den Zeichnungen dargestellt.

Das andere Ende des Kopftragarms 13 ist mit dem entsprechenden Ende der Grundplatte 10 durch eine ein Scharnier bildende Feder 134 verbunden, die eine Drehbewegung weg vom festen unteren Magnetkopf 11 ermöglicht. Die ein Scharnier bildende Feder 134 liegt in einer Stellung, wie es in den Zeichnungen dargestellt ist, beim Laden des Kopfs an einem Anschlag 101 an, so daß sich eine definierte Begrenzung für die Bewegung in Richtung gegen den festen Magnetkopf 11 ergibt.

Die Feder 134 ist zwischen dem Ladeanschlag 101 und einem Trägerblock 14 eingeklemmt. Dieser Trägerblock 14 ist an einem hervorstehenden Ende der Grundplatte 10, die den Ladeanschlag 101 bildet, mittels Schraubenmuttern 151 und 152 befestigt. An dem den Schraubenmuttern gegenüberliegenden Ende ist der Trägerblock 14 mit abgeschrägten Flächen versehen, um die Bewegung der Feder 134 zu ermöglichen, wenn der Kopftragarm 13 in seine Entladestellung gehoben wird. An dieser Kante ist der Trägerblock 14 auch mit einem Sockel 141 versehen, der ein Lager für einen Stift 142 bildet.

Dieser Stift 142 bildet den Drehpunkt eines Zusatzarms 16, der sich im wesentlichen parallel zum Kopftragarm 13 erstreckt. Der Zusatzarm 16 ist ein flacher Ausleger geringer Masse. An dem Ende, an dem er befestigt ist, ist der Arm 16 mit einem Paar verlängerter seitlicher Arme 161 versehen, die sich in rechten Winkeln zur ebenen Fläche erstrecken.

Diese seitlichen Arme 161 sind bezüglich des Trägerblocks 14 mittels des Stiftes 142 drehbar befestigt. Am Stift 142 ist der Zusatzarm ebenfalls mit einem ausgearbeiteten Mittelteil 162 versehen, das sich in Längsrichtung erstreckt. Weiterhin bildet der Stift 152 die Halterung für eine Torsionsfeder 17. Das kurze Ende dieser Feder 17 ist am Trägerblock 14 angeordnet. Das andere, verlängerte gerade Ende erstreckt sich in Längsrichtung in das ausgearbeitete Mittelteil 162 des Zusatzarms 16.

Am freien Ende des Zusatzarms 16, entgegengesetzt dem Trägerblock 14 ist der Arm 16 mit einem Knopf 163 versehen, der zur Kopfabdeckung 132 hinweist und beim Laden des Kopfes den Hebelpunkt bildet. An der dem Knopf 163 zugeordneten Stelle der Kopfabdeckung 132 kann ein Dämpfungsglied in Form eines Polsters angeordnet sein. Zusätzlich ist der Zusatzarm 16 für das Anheben mit einem Ansatz 164 versehen, der als rechtwinklige Verlängerung des freien Endes des Tragarms 16 ausgebildet ist und dem Ansatz 133 des Kopftragarms 13 benachbart ist.

Weiterhin ist am Zusatzarm 16 durch zwei Nieten eine freitragend angeordnete Blattfeder 18 befestigt, die zum Kopftragarm 13 weist. Das freie Ende dieser Blattfeder 18 erstreckt sich zur Oberseite des Kopftragarms 13 und wird dort durch zwei Finger 136 gehalten. Diese Finger 136 erheben sich an beiden Seiten des verdünnten zentralen Teils 131 des Kopftragarms 13.

Während des Betriebs einer magnetischen Speichereinrichtung, die die beschriebene Kopfträgeranordnung verwendet, muß das Aufzeichnungsmedium eingeführt bzw. ausgeworfen werden. Um diesen Vorgang zu ermöglichen, muß der Kopftragarm 13 angehoben werden. Dies wird erreicht durch Anheben des Ansatzes 133 und dessen Festhalten in einer Entladestellung. In dieser Stellung ist zwischen dem oberen Magnetkopf 12 und dem unteren festen Magnetkopf 11 ein Zwischenraum, so daß das Aufzeichnungsmedium zwischen diese eingeführt werden kann oder aus einer Arbeitsstellung ausgeworfen werden kann, ohne die Oberfläche der Magnetköpfe oder des Aufzeichnungsmediums selbst zu beschädigen. Zum Aufsetzen des oberen Magnetkopfs 12 auf die Oberfläche eines eingeführten Aufzeichnungsmediums wird der Ansatz 133 freigegeben. Infolge der Federkräfte der ein Scharnier bildenden Feder 134 und der Torsionsfeder 17 werden der Kopftragarm 13 und der Zusatzarm 16 ebenfalls ausgelöst.

Diese Stellung, in der sowohl der Kopftragarm 13 als auch der Zusatzarm 16 freigegeben sind, wird als erste Ladestellung bezeichnet. Die Federkräfte der vorgespannten Feder 134 und der Torsionsfeder 17 sind so dimensioniert, daß die Druckkraft des Zusatzarms 16 auf die Kopfabdeckung 132 und damit des oberen Magnetkopfs 12 gegen das Aufzeichnungsmedium in einem Bereich zwischen 10 und 20 g, vorzugsweise etwa 16 g aufweist. Wie allgemein bekannt, ist dies eine geeignete Druckkraft für den Magnetkopf, um Schreib/Lesevorgänge durchzuführen.

Diese Druckkraft wäre jedoch während einer Betriebsweise zu groß, während der die Magnetköpfe abgeschaltet sind. Eine derartige Betriebsweise hätte eine übermäßige Abnutzung die Folge, wenn der Magnetkopf in einer Leerlaufstellung bezüglich einer der Spuren des Aufzeichnungsmediums bleiben würde. In der oben beschriebenen Anordnung wird jedoch in einem Bereitschaftsbetrieb der Magnetköpfe der Ansatz 164 des Zusatzarms 16 durch eine Anhebesteueranordnung betätigt, beispielsweise durch einen nichterregten Elektromagneten. Der Zusatzarm 16 wird dann durch die Steueranordnung von seiner ersten Ladestellung in seine zweite Ladestellung angehoben. In dieser Stellung ist der Zusatzarm 16 mit seinem freien Ende vom Kopftragarm 13 entfernt. In dieser Stellung ist die Torsionsfeder 17 wirkungslos. Jedoch die Blattfeder 18 ist weiterhin mit dem dünnen Zentralteil 131 des Kopftragarms 13 in Verbindung. Die Feder 18 ist derart dimensioniert, daß der obere Magnetkopf 12 das Aufzeichnungsmedium mit einer kleinen Druckkraft berührt, die 1 bis 5 g, vorzugsweise 3 g beträgt.

Vergleicht man die sich ergebenden Druckkräfte des oberen Magnetkopfs 12 auf das Aufzeichnungsmedium in beiden Ladestellungen, so ergibt sich, daß die Funktion des Zusatzarms 16 sowohl eine sichere Berührung während Schreib/Lesevorgängen als auch eine nur geringe Berührung in einem Bereitschaftsbetrieb sicherstellt. Durch die geringere Druckkraft in der zweiten Ladestellung wird eine übermäßige Abnutzung des Aufzeichnungsmediums vermieden und das Gleiten des oberen Magnetkopfs 12 auf dem Aufzeichnungsmedium wird sichergestellt, da entgegengerichtete Kräfte überwunden werden, die durch die Feder 134 oder ein Kopfkabel verursacht werden. Diese Verbesserung vermeidet den Nachteil des Abhebens des Magnetkopfs vom Aufzeichnungsmedium während eines Bereitschaftsbetriebs, was eine längere Zugriffszeit zur Folge hätte.

Selbstverständlich ist die beschriebene Anordnung austauschbar mit Kopfträgeranordnungen von bekannten Geräten. Dieses Merkmal wird durch die Anpassung des Zusatzarms 16 erreicht. Der erforderliche Raumbedarf für den Zusatzarm 16 und die befestigte Blattfeder 18 ist sehr gering. Weiterhin sind nur geringe Änderungen in der Ausgestaltung des Trägerblocks 14 erforderlich, um den Zusatzarm 16 drehbar zu befestigen. Die erforderliche Steueranordnung zum Anheben des Zusatzarms 16 von der ersten Ladestellung in die zweite Ladestellung ist allgemein bekannt bei Diskettenspeichern und häufig verwendet. Deshalb ist der zusätzliche Steuermechanismus auch im Hinblick auf eine Austauschbarkeit geeignet. Andererseits löst die offenbarte Verbesserung das Problem von kurzen Zugriffszeiten in einem System mit hoher Zuverlässigkeit. Selbstverständlich kann die beschriebene Verbesserung sehr zweckmäßig auch mit anderen Arten von Diskettenspeichern als der beschriebenen Anordnung mit doppelseitiger Aufzeichnung verwendet werden.

**Ansprüche**

1. Kopfträgeranordnung für ein Diskettenlaufwerk, die eine in radialer Richtung bezüglich einer als Aufzeichnungsmedium dienenden Diskette bewegbare Grundplatte (10) aufweist, und die einen wenigstens einen Magnetkopf (12) enthaltenden Kopftragarm (13) aufweist, der an der Grundplatte drehbar gelagert ist und senkrecht zur Ebene des Aufzeichnungsmediums schwenkbar ist, gekennzeichnet durch einen bezüglich der Grundplatte (10) drehbar gelagerten Zusatzarm (16), der senkrecht zur Ebene des Aufzeichnungsmediums gegen den Kopftragarm (13) und von diesem weg zwischen einer ersten Ladestellung, in der der Magnetkopf bezüglich der Diskette eine Arbeitsstellung einnimmt und eine zweite Ladestellung schwenkbar ist, in der der Magnetkopf, während er mit der Diskette noch in Berührung ist, bezüglich der Diskette eine Bereitschaftsstellung einnimmt und an dem eine Steueranordnung angreift, die den Zusatzarm (16) von der ersten Ladestellung in die zweite Ladestellung anhebt, durch eine erste Federanordnung (17), die den Zusatzarm (16) gegen den Kopftragarm (13) in die erste Ladestellung drückt, um den am Kopftragarm (13) angeordneten Magnetkopf (12) mit der Diskette in Wechselwirkung zu bringen und durch eine zweite Federanordnung (18), die zwischen dem Kopftragarm (13) und dem Zusatzarm (16) angeordnet ist und die in der zweiten Ladestellung des Zusatzarms (16) wirksam ist, um auf den Kopftragarm (13) eine Druckkraft auszuüben, die kleiner ist als die vom Zusatzarm (16) in der ersten Ladestellung ausgeübte Druckkraft, wobei der Magnetkopf (12) sowohl in der Arbeitsstellung als auch in der Bereitschaftsstellung mit dem Aufzeichnungsmedium in Berührung bleibt.

2. Kopfträgeranordnung nach Anspruch 1, dadurch gekennzeichnet, daß der Zusatzarm (16) in der ersten Ladestellung im wesentlichen parallel zum Kopftragarm (13) ausgerichtet ist.

3. Kopfträgeranordnung nach Anspruch 1 oder Anspruch 2, dadurch gekennzeichnet, daß die erste Federanordnung (17) als Torsionsfeder ausgebildet ist.

4. Kopfträgeranordnung nach einem der Ansprüche 1 bis 3, dadurch gekennzeichnet, daß der Hebelpunkt beim Laden des Magnetkopfs (12) zwischen dem Kopftragarm (13) und dem Zusatzarm (16) liegt.

5. Kopfträgeranordnung nach Anspruch 4, dadurch gekennzeichnet, daß der Hebelpunkt aus Berührungselementen an einander zugeordneten Flächen des Zusatzarms (16) bzw. des Kopftragarms (13) gebildet wird.

6. Kopfträgeranordnung nach Anspruch 5, dadurch gekennzeichnet, daß ein Berührungselement als Höcker (163) und das andere Berührungselement als Polster ausgebildet ist, daß der Höcker (163) und das Polster in der ersten Ladestellung miteinander in Berührung sind und in der zweiten Ladestellung voneinander getrennt sind.

7. Kopfträgeranordnung nach Anspruch 1, dadurch gekennzeichnet, daß die zweite Federanordnung (18) als Blattfeder ausgebildet ist.

8. Kopfträgeranordnung nach Anspruch 7, dadurch gekennzeichnet, daß die Blattfeder (18) freitragend ausgebildet ist und zwischen dem Kopftragarm (13) und dem Zusatzarm (16) angeordnet ist.

9. Kopfträgeranordnung nach Anspruch 8, dadurch gekennzeichnet, daß ein Ende der Blattfeder (18) am Zusatzarm (16) befestigt ist und das andere Ende an der Oberseite des Kopftragarms (13) anliegt.

10. Kopfträgeranordnung nach einem der Ansprüche 1 bis 9, dadurch gekennzeichnet, daß die erste und die zweite Federanordnung (17 bzw. 18) derart ausgebildet sind, daß sie auf den Magnetkopf in der ersten Ladestellung des Zusatzarms (16) eine Druckkraft von 10 bis 20 g und in der zweiten Ladestellung eine Druckkraft von 1 bis 5 g ausüben.

## Claims

1. A head carrier arrangement for a floppy disc drive unit which comprises a base plate (10) movable in the radial direction relative to a floppy disc serving as a recording medium, and a head support arm (13) which has at least one magnetic head (12) pivoted to the base plate and free to swivel at right angles to the plane of the recording medium, characterised by an additional arm (16) pivotably mounted relative to the base plate (10) and free to swivel at right angles to the plane of the recording medium against the head support arm (13) and away from the latter between a first loading position in which the magnetic head assumes an operating position relative to the floppy disc and a second loading position in which the magnetic head assumes a ready position relative to the floppy disc in contact with the floppy disc, and a control arrangement to act upon the magnetic head which lifts the additional arm (16) from the first loading position into the second loading position, and further characterised by a first spring arrangement (17) which presses the additional arm (16) against the head support arm (13) into the first loading position in order to bring the magnetic head (12) arranged on the head support arm (13) into interaction with the floppy disc, and by a second spring arrangement (18) arranged between the head support arm (13) and the additional arm (16) and which is effective in the second loading position of the additional arm (16) to exert a compressive force smaller than the compressive force exerted by the additional arm (16) in the first loading position, the magnetic head (12) remaining in contact with the recording medium both in the operating position and in the ready position.

2. A head support arm as claimed in Claim 1, characterised in that the additional arm (16) is aligned parallel to the head support arm (13) in the first loading position.

3. A head support arm as claimed in Claim 1 or Claim 2, characterised in that the first spring arrangement (17) is a torsion spring.

4. A head carrier arrangement as claimed in one of Claims 1 to 3, characterised in that when loading the magnetic head (12), the lever point lies between the head support arm (13) and the additional arm (15).

5. A head carrier arrangement as claimed in Claim 4, characterised in that the lever point is formed from contact elements on mutually assigned surfaces of the additional arm (16) or the head support arm, as the case may be.

6. A head carrier arrangement as claimed in Claim 5, characterised in that one contact element is designed as a hump (163) and the other contact element is designed as a pad, and that the hump (163) and the pad are in contact with one another in the second loading position.

7. A head carrier arrangement as claimed in Claim 1, characterised in that the second spring arrangement (18) is a flat spring.

8. A head carrier arrangement as claimed in Claim 7, characterised in that the flat spring (18) is self-supporting and is arranged between the head support arm (13) and the additional arm (16).

9. A head carrier arrangement as claimed in Claim 8, characterised in that one end of the flat spring (18) is secured to the additional arm (16) and the other end adjoins the surface of the head support arm (13).

10. A head carrier arrangement as claimed in one of Claims 1 to 9, characterised in that the first and the second spring arrangement (17 and 18) are so constructed that a compressive force of 10 to 20 g is exerted on the magnetic head in the first loading position of the additional arm (16) and a compressive force of 1 to 5 g in the second loading position.

**Revendications**

1. Ensemble de support de tête pour un dispositif d'entraînement de disquette, qui comporte une plaque de base (10) susceptible d'être déplacée en direction radiale par rapport à une disquette servant de milieu registre d'information et comportant un bras de support de tête (13) contenant au moins une tête magnétique (12), ledit bras étant articulé sur la plaque de base et étant susceptible de basculer perpendiculairement au plan du milieu registre d'information, caractérisé par un bras supplémentaire (16) qui est articulé sur la plaque de base (10), et qui est susceptible de basculer, perpendiculairement au plan du milieu registre d'information, vers le bras de support de tête (13) et de s'éloigner de ce dernier, entre une première position de chargement dans laquelle la tête magnétique assume une première position de travail par rapport à la disquette et une seconde position de chargement dans laquelle la tête magnétique, alors qu'elle est encore en contact avec la disquette, assume par rapport à celle-ci une position d'attente et qui est attaquée par un dispositif de commande qui soulève le bras supplémentaire (16) de la première position de chargement à la seconde position de chargement, par un premier dispositif à ressort (17) qui refoule le bras supplémentaire (16) contre le bras de support de tête (13) dans la première position de chargement pour amener la tête magnétique (12) disposée sur le bras de support de tête en interaction avec la disquette, et par un second dispositif à ressort (18) qui est agencé entre le bras de support de tête (13) et le bras supplémentaire (16) et qui, dans la seconde position de chargement du bras supplémentaire (16), agit pour exercer sur le bras de support de tête (13) une force de pression qui est inférieure à la force de pression exercée par le bras supplémentaire (16) dans la première position de chargement, la tête magnétique (12) restant en contact avec le milieu registre d'information aussi bien dans la position de travail que dans la position d'attente.

2. Ensemble de support de tête selon la revendication 1, caractérisé par le fait que le bras supplémentaire (16) est, dans la première position de chargement, aligné suivant une direction sensiblement parallèle au bras de support de tête (13).

3. Ensemble de support de tête selon la revendication 1 ou la revendication 2, caractérisé par le fait que le premier dispositif à ressort (17) est réalisé sous la forme d'un ressort à torsion.

4. Ensemble de support de tête selon l'une des revendications 1 à 3, caractérisé par le fait que le point de levier lors du chargement de la tête magnétique (12) est situé entre le bras de support de tête (13) et le bras supplémentaire (16).

5. Ensemble de support de tête selon la revendication 4, caractérisé par le fait que le point de levier est formé par des éléments de contact de surfaces associées entre elles du bras supplémentaire (16) et du bras de support de tête (13).

6. Ensemble de support de tête selon la revendication 5, caractérisé par le fait qu'un élément de contact est réalisé sous la forme d'un bossage (163) et l'autre élément de contact sous la forme d'un coussin, que le bossage (163) et le coussin sont en contact entre eux dans la première position de chargement et sont séparés l'un de l'autre dans la seconde position de chargement.

7. Ensemble de support de tête selon la revendication 1, caractérisé par le fait que le second dispositif à ressort (18) est réalisé sous la forme d'un ressort à lame.

8. Ensemble de support de tête selon la revendication 7, caractérisé par le fait que la lame de ressort (18) est réalisée de façon auto-portante et est disposée entre le bras de support de tête (13) et le bras supplémentaire (16).

9. Ensemble de support de tête selon la revendication 8, caractérisé par le fait qu'une extrémité de la lame de ressort (18) est fixée au bras supplémentaire (16) et l'autre extrémité porte contre la face supérieure du bras de support de tête (13).

10. Ensemble de support de tête selon l'une des revendications 1 à 9, caractérisé par le fait que le premier et le second dispositifs à ressort (17 et 18) sont réalisés de telle façon qu'ils exercent sur la tête magnétique, dans la première position de chargement du bras supplémentaire (16) une force de pression de 10 à 20 g et dans la seconde position de chargement une force de pression de 1 à 5 g.

FIG. 1

FIG. 2

FIG. 3